# EUROPEAN PATENT APPLICATION

(11) **EP 2 053 373 A2**
(43) Date of publication of application: **29.04.2009**
(21) Application number: 08166110.0
(22) Date of filing: 08.10.2008
(51) Int. Cl.: G01L 9/16

(54) **Magnetostrictive strain sensor with single piece sensor cavity**

(30) Priority: 24.10.2007 US 977254
(71) Applicant: Delphi Technologies, Inc., Troy, Michigan 48007 (US)
(72) Inventor: Schroeder, Thaddeus, Rochester Hills, MI 48309 (US); Taye, Elias, Macomb Twp, MI 48042 (US); Thrush, Christopher, Shelby Twp, MI 48316 (US); Lequesne, Bruno, Troy, MI 48084 (US)
(74) Representative: Denton, Michael John

(57) **Abstract**

In one embodiment, a sensor assembly has a magnetostrictive (MS) element (20, 52, 76, 96, 108, 126) and a sensor housing (18, 50, 70, 98, 106) defining at least one active wall (28, 68, 80, 103, 116). A sensor channel is disposed on a first side of the active wall, with the MS element being disposed in the sensor channel and closely received therein. A fluid is on a second side of the active wall, and the active wall is the wall through which stress from pressure of the fluid causes stress on the MS element. The sensor channel defines an axis parallel to the active wall, and the MS element is positioned adj acent the active wall by sliding the MS element into an end of the sensor channel in a direction parallel to the active wall.

## Description

### TECHNICAL FIELD

The present invention relates generally to magnetostrictive (MS) stress sensors.

### BACKGROUND OF THE INVENTION

Magnetostrictive stress sensors can be used to measure stress such as might be imposed by the stress imposed on the sensor by fluid pressure. Typically, a MS stress sensor includes an inductance coil that extends around a MS core for establishing a loop of magnetic flux looping through the core and extending around the coil. The core may be made of an MS material, such as a Nickel-Iron alloy to provide a primary path for the magnetic flux in a first portion of the loop of magnetic flux. A magnetic carrier, preferably integral to the core, can provide a return path for the magnetic flux in a second portion of the loop of magnetic flux as the magnetic flux circles the coil through the core and the carrier. The permeability of the MS core, and thus the impedance of such a device, is a function of the stress applied to the core along the axis. The coil inductance (or more generally the coil impedance) therefore provides a signal that represents stress on the core and, hence, whatever is causing the stress, such as fluid pressure on the core.

### SUMMARY OF THE INVENTION

In one embodiment, a sensor assembly has a magnetostrictive (MS) element and a sensor housing defining at least one active wall. A sensor channel is disposed on a first side of the active wall, with the MS element being disposed in the sensor channel and closely received therein. A fluid is on a second side of the active wall, and the active wall is the wall through which stress from pressure of the fluid causes stress on the MS sensor. The sensor channel defines an axis parallel to the active wall, and the MS sensor is positioned adjacent the active wall by sliding the MS sensor into an end of the sensor channel in a direction parallel to the active wall.

In one non-limiting implementation, the sensor channel defines opposed sides, each parallel to the active wall, and the MS sensor touches opposed sides while disposed in the channel, and moreover can be slightly pre-loaded with compression between the sides of the sensor channel.

In some embodiments the fluid is disposable in a fluid chamber defining a closed end and at least one sidewall, with the active wall being defined by the closed end and with the sensor channel defining a long axis parallel to the closed end. Or, the active wall can be defined by one or more of the sidewalls. When plural sidewalls establish the active wall, the fluid chamber can define opposed arms and a space therebetween with an active wall being established along an inside edge of each arm and with the sensor channel extending into the space between the active walls.

If desired, the sensor housing can form a fluid chamber holding the fluid. Alternatively, the sensor housing does not hold the fluid and instead is threadably engageable with a vessel holding the fluid.

In all cases, the MS element can be a single-piece element comprising a core and a through-hole though which the coil is wound. Alternatively, in all cases, the MS element can be a multi-piece element surrounded by an excitation coil inducing a magnetic flux, and the sensor housing is then made of a magnetic material. The sensor channel is made of a unitary piece of material and provides a return flux path.

In another aspect, a method for establishing a sensor assembly includes sliding a magnetostrictive (MS) element into a sensor channel of a sensor housing. The channel defines opposed sides, and the MS element slides against both sides as it moves in the channel. The method also includes disposing the MS element adjacent a first side of an active wall and disposing a fluid on a second side of the active wall. Pressure of the fluid against the active wall causes stress on the MS sensor. The MS sensor outputs a signal representative of the stress.

In yet another aspect, a sensor is disclosed for outputting a signal representative of stress caused by a source of stress. The sensor includes magnetostrictive (MS) means held between opposed walls of a sensor channel and disposable in the channel by sliding the MS means in the channel between the walls. The channel is juxtaposable with the source of stress such that the source of stress causes stress in the MS means. Signal means are configured for carrying a signal representative of stress of the MS means.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 shows a system in accordance with one non-limiting embodiment of the present invention;

Figure 2 is a cross-sectional side view of a first embodiment of the MS sensor assembly, showing the sensor channel parallel to the top of the fluid chamber which forms the active wall;

Figure 3 is a top view as seen along the line 3-3 in Figure 2;

Figure 4 is a cross-sectional side view of a second embodiment of the MS sensor assembly, showing the sensor channel alongside the fluid chamber parallel to the active wall;

Figure 5 is a cross-sectional side view of a third embodiment of the MS sensor assembly, showing the sensor channel formed between opposed fluid chamber arms;

Figure 6 is a top view as seen along the line 6-6 in Figure 5;

Figure 7 is a top view of a variation of the embodiment shown in Figure 5, as would be seen along the line 6-6 in Figure 5;

Figure 8 is a partial cross-section of another embodiment of the sensor assembly in which the fluid chamber is not defined by the sensor housing and the sensor housing is threadably engaged with a fluid vessel;

Figure 9 is a partial cross-section of another embodiment of the sensor assembly in which the MS sensor is a multi-piece element with a return flux path being provided by the walls of the single-piece sensor channel; and

Figures 10 and 11 are side views illustrating assembly steps.

### DESCRIPTION OF THE PREFERRED EMBODIMENT

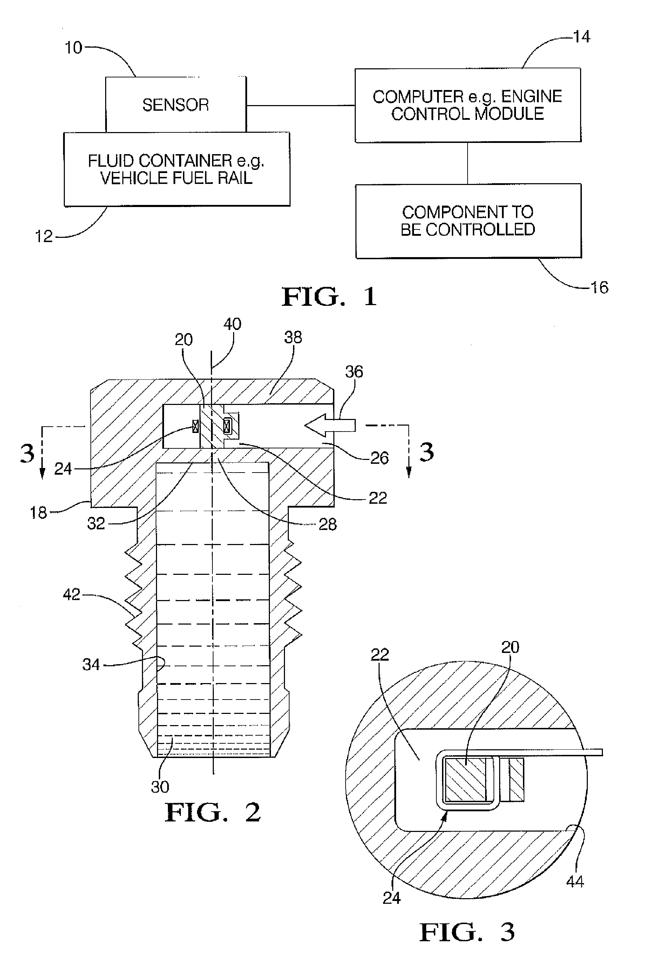

Beginning with Figure 1, a general, non-limiting implementation of an MS stress sensor 10 is shown. The MS stress sensor 10 can be coupled to a source of pressure, such as to a fluid container 12, with the MS stress sensor 10 having the ability to sense fluid pressure in the fluid container 12 in accordance with principles below. Without limitation, the fluid container 12 may be, e.g., a vehicle fuel rail, although present principles are not limited to any particular fluid application.

The MS stress sensor 10 is also electronically connected to a computer 14 which may be, without limitation, an engine control module. The computer 14 receives the signal that is output by the sensor 10 for processing the signal to, e.g., correlate the stress as indicated by the signal to a fluid pressure. Further, the computer 14 may be electronically connected to a component 16 such as a fuel injector that may be controlled by the computer 14 based on data received from the MS stress sensor 10.

A first embodiment of an MS stress sensor 10 is shown in Figures 2 and 3. In overview, a sensor channel, described further below, provides a means for placing an MS stress sensor within its housing. Further, the sensor channel is defined at least in part by a closed end of a fluid chamber, with an active wall transferring stress between the sensor channel containing an MS sensing element and the fluid chamber itself.

With greater specificity, a unitary MS sensor housing 18 is shown in Figure 2 with a preferably unitary MS stress sensor 20 disposed in a channel 22 formed by the housing 18 and with a coil (or coils) 24 wound around the sensor 20. The sensor 20 is made of a MS element capable of receiving the magnetic flux generated by the coil 24, and it touches opposed sides of the walls of the channel 22 as shown. If desired, the sensor can be slightly pre-loaded with compression in the channel. Further, the housing 18 can be made out of a magnetic material, as are all other housings described herein.

The coil 24 is wound around the sensor 20 plural times in a non-specific, non-limiting embodiment, e.g., is wound around the entire sensor or wound around one side and through a through hole in the middle of the sensor. In function, the coil 24 may be pulsed with an AC current to generate a flux in a core of the sensor 20 and then the resulting AC voltage can be used to pickup signals representative of the changing flux in the core and, hence, the pressure in the fluid chamber. Alternatively, the coil 24 may be pulsed with an AC voltage to generate a flux in a core of the sensor 20 and then the resulting AC current can be used to pickup signals representative of the changing flux in the core and, hence, the pressure in the fluid chamber. These are only two exemplary methods to determine the inductance, or more generally, the impedance, of a coil.

An opening 26 is also shown in Figure 2, which provides an entrance to the sensor channel 22 through which the MS sensor unit 20 may be disposed into the appropriate place and closely received therein. An active wall 28 of the housing 18 separates the sensor channel 22 from a fluid chamber 30 formed by the housing 18, which is understood to contain fluid under pressure. The wall 28 is designated as "active" because it is through the wall 28 that stress caused by fluid pressure is transferred to the sensor 20. Further, as shown best in Figure 2 the fluid chamber 30 of the housing 18 defines a closed end 32 and optional opposed sidewalls 34. Optional walls 34 may be in relatively close proximity, and parallel to one another, as shown in Figure 2; farther apart than shown; at any angle with respect to one another; or, much farther apart or even omitted as for instance if closed end 32 is the side wall of a long conduit, such as in the case a fuel rail. In the latter case, the housing 18 is integral to the vessel holding the fluid.

A sliding axis 36 is defined by the sensor channel 22, with the axis 36 being parallel to the closed end 32 of the fluid chamber 30. The sliding axis 36 provides an axis along which the sensor 20 is slid into place. The sensor channel 22 is defined by a uniform upper part 38 of the housing 18. The upper part 38 secures the sensor 20 in the dimension of the force from the active wall 28, such that no top cover or lid need be installed to secure a sensor unit. Thus, the sensor channel 22, which is disposed within a unitary sensor housing 18 and which advantageously can be parallel to the long axis 40 of the fluid chamber closed end 32, eliminates the need for a top or lid that otherwise must be precisely and securely installed on a housing to secure a sensor unit in place. Last, if housing 18 is not integral to the vessel walls, fastening means such as threads 42 are shown formed on the outside of the housing 18, to provide a way for mounting an MS stress sensor assembly on another object.

The above structures are also shown in part in Figure 3. After the sensor 20 disposed within the sensor channel 22 in the appropriate position and closely received therein, the opening 26 and sensor channel 22 may be filled in with an appropriate material 44 such as an overmolding material so as to advantageously fill the remaining space within the housing 18. The overmolding material will advantageously hold the sensor in place within channel 22, and protect it from the environment.

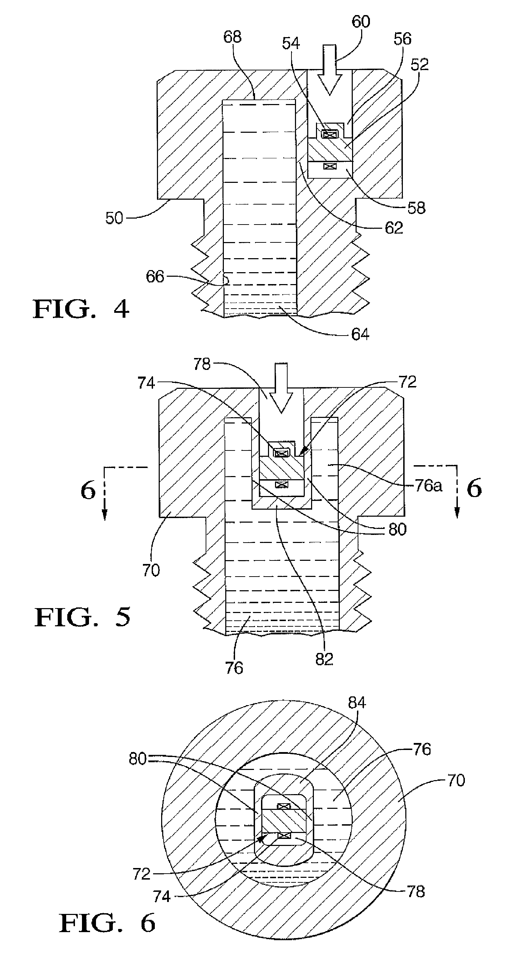

A second embodiment of an MS stress sensor assembly is shown from a cross-sectional side view in Figure 4. Similar to the first embodiment, the second embodiment has a sensor channel that provides a means for placing an MS stress sensor within its housing and there is still only one active wall between the sensor channel and the fluid chamber. However, in the second embodiment a sensor channel is engaged with an active wall defined at least in part by a side wall and not a closed end of a fluid chamber.

With more specificity, the second embodiment shown in Figure 4 has a unitary sensor housing 50 and a MS sensor 52. Further, the sensor 52 is engaged with a coil 54, the sensor 52 and coil 54 being substantially similar in function and configuration to the sensor and coil described in Figure 2.

Distinguishing Figure 4 from the first embodiment shown in Figures 2 and 3, an opening 56 to a sensor channel 58 is shown formed in the housing 50. The sensor 52 is slid into the sensor channel 58 through the opening 56. The sensor channel 58 defines a sliding axis 60 which is parallel to an active wall 62. As was the case above, the active wall 62 is defined by a wall of a fluid chamber 64, in this case, a side wall 66 of a fluid chamber 64 having a closed end 68. The active wall 62 is substantially similar in function and configuration to the active wall in Figure 2. The closed end 68 of the fluid chamber 64 is also shown, but is not part of the active wall 62.

Thus, the sensor channel 5 8 is adj acent to one side of the active wall 62 and the fluid chamber 64 is adjacent to the opposite side of the active wall 62. The sensor 52 advantageously remains secure within the sensor channel 58 by way of the unitary sensor housing 50, eliminating the need for a supplemental part to be installed on the sensor housing so as to secure a sensor unit in place. Further, after the sensor 52 is in place, the opening 56 and sensor channel 58 may be filled in with an appropriate material so as to advantageously protect the sensor for reasons stated above.

A third embodiment of an MS stress sensor assembly is shown in Figures 5 and 6. In overview, the third embodiment has a sensor channel that provides a means for placing an MS stress sensor within its housing. However, in Figures 5 and 6 the sensor channel is engaged with plural active walls defined by the fluid chamber instead of one active wall as implemented in the embodiments above.

With more specificity, a unitary sensor housing 70 holds a MS sensor 72 with coil 74. The housing 70 defines a fluid chamber 76 and coaxially thereto a sensor channel 78, with co-parallel active walls 80 formed by the housing 70 separating the two and being parallel to the axis of the sensor channel 78. Between the active walls 80, a perpendicular third wall 108 of the housing 70 also separates the sensor channel 78 from the fluid chamber 76 as shown. The sensor 72 can be slid into the position shown through the opening of the sensor channel 78. In effect, the active walls 80 and sensor channel 78 are located between extension arms 76a of the fluid chamber.

The active walls 80 may partially surround the sensor channel 78, or as shown in Figure 6 they may be parts of an interior wall that completely surrounds the sensor channel 78, in some implementations with the active wall portions of the complete interior wall being thinner than staggered thicker portions 84.

The MS sensor 72 should preferably be placed along identical points of maximum stress on the active walls 80. Thus, an increased amount of stress acts on the MS sensor 72 because of the position of the MS sensor 72 relative to the plural active walls 80 rather than only one active wall.

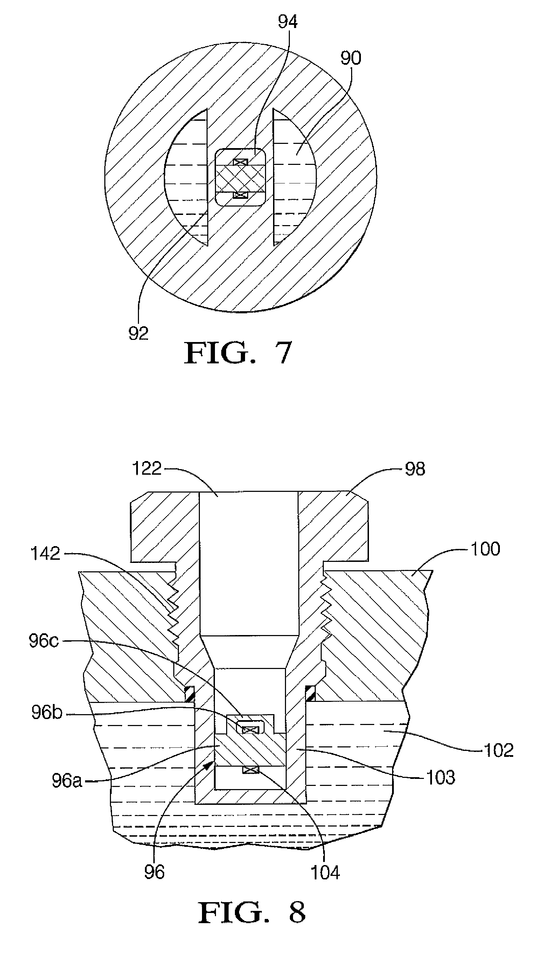

Figure 7 shows an embodiment that in all essential respects is identical to the embodiment shown in Figures 5 and 6, except that arms 90 of a fluid chamber 92 do not completely circumscribe the sensor channel 94, but rather are radially separated from each other as shown.

With all of the above embodiments, the sensor element, i.e. sensor core and coil, has been placed in one particular area of the sensor housing. Specifically, the sensor element has been placed in the upper, dimensionally larger portion of the sensor housing, the housing itself holding a portion of the fluid to be sensed. An alternative, simpler embodiment is sown in Figure 8.

Figure 8 shows an MS sensor core 96 that is disposed within a lower part of a unitary sensor housing 98. The sensor housing 98 itself can be threadably engaged in a vessel 100 which holds fluid 102, rather than having the housing 98 itself hold the fluid. However, pressure from the fluid 102 still acts on the sensor core 96 through active walls 103 in a way similar to all of the embodiments above. Comparing Figure 8 and Figure 5, the sidewalls in Figure 5 are eliminated in the design of Figure 8, and the channel 122 in Figure 8 is located within the threads 142 that fasten the sensor 98 to the wall of fluid vessel 100. The geometry of housing 98 in Figure 8, therefore its manufacture, are greatly simplified compared to that of housing 70 in Figure 5.

Further, the sensor core 96 has a coil 104 that is substantially similar in function and configuration to the coil in Figure 2. It may be appreciated that in Figure 8 the sensor core 96 is placed in relatively close proximity to the body of fluid 102 outside the housing 98.

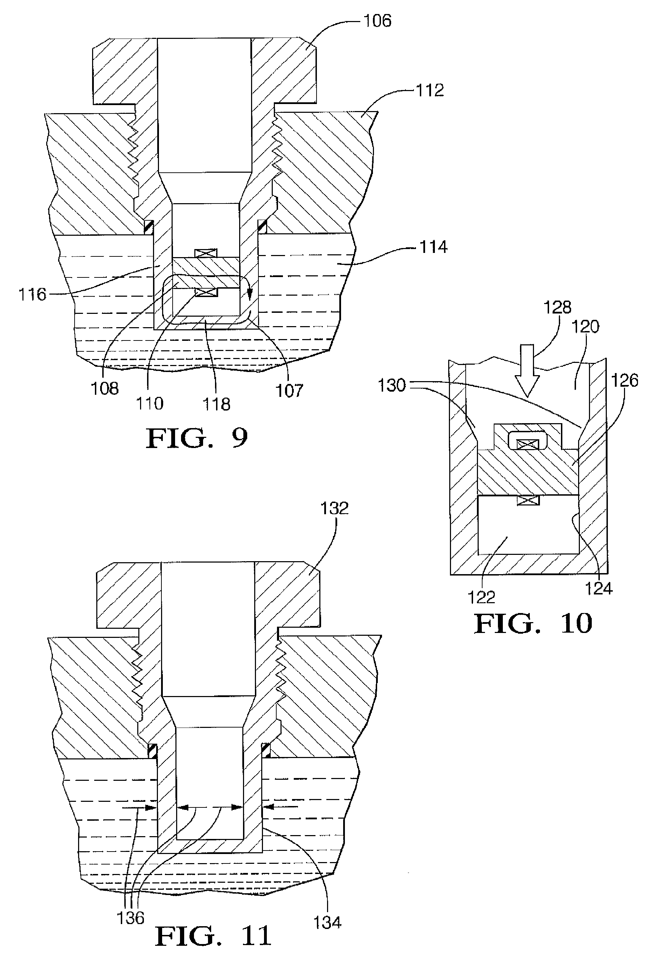

The embodiments shown above comprised a single-piece core. Referring to Figure 8 as an example, the core 96 includes a main parallelepiped-shaped body 96a through which the stress being measured is transmitted; a C-shaped portion 96c integral with main body 96a, and through which the magnetic flux generated by the coil 104 travels. The main body 96a and C-shaped part 96c thus define a through-hole 96b through which the coil 104 is wound as shown. This single-piece design is advantageous in eliminating all airgaps within the path of the magnetic flux, however, the winding process of the coil 104 through the through-hole 96b can be simplified with the alternate design shown in Figure 9.

As seen in Figure 9, an MS sensor core can be a multi-piece core. To allow an easy comparison with Figure 8, the multi-piece core is shown in Figure 9 again disposed within a lower part of a unitary sensor housing 106, this time with a resulting magnetic flux depicted by lines 107. The unitary sensor housing 106 has a sensor core 108 disposed within it, the core 108 having a coil 110 wound round it. Further, the unitary sensor housing 106 can be threadably engaged with a vessel 112 holding a fluid 114, with active walls 116 of the sensor housing 106 separating the sensor core 108 from the fluid 114.

With this structure, the magnetic flux return path 117 has a semi-circular shape and advantageously flows through the active walls 116, a non-active bottom wall 118 perpendicular to the active walls 116, and the core 108 itself while essentially not encountering any gaps of air along the path of the magnetic flux 107. Further, it should be noted that both the active walls 116 and non-active wall 118 are made of a material capable of carrying a magnetic flux, e.g. steel.

Air gaps detract from the permeability of an MS core, and thus the inductance of such a device, by causing a weakened or varied signal that is to be measured. Thus it may be appreciated that the path of the flux 107 shown in Figure 7 essentially does not encounter any air gaps which may weaken or vary the inductance of the sensor core 108. The absence of any gap of air is provided by the close fit of sensor core 108 within the channel.

Regarding the manufacturing and assembly of an MS sensor element within a sensor housing, Figure 10 provides one non-limiting method for securing a sensor element within a sensor housing by way of a sensor channel substantially similar in function and configuration to the cavities included in all the embodiments mentioned above.

Figures 10 and 11 illustrate non-limiting manufacturing steps that may be taken. Figure 10 simply shows that a slide portion 120 of a sensor channel 122 can be recessed from a hold portion 124. An MS sensor 126 can be slid into the slide portion 120 as indicated by the arrow 128 to the hold portion 124. Thus, a non-limiting, non-specific resulting recess 130 transitions the slide portion 120 to the hold portion 124, facilitating moving the sensor into the desired location in the hold portion with a slight stress pre-load being applied to the sensor to eliminate air gaps.

Further regarding the manufacturing and assembly of an MS sensor element within a sensor housing, Figure 11 provides a non-limiting method for shaping a sensor housing and, in particular, shaping the surfaces and dimensions of one or more active walls. To ensure that stress is uniformly and evenly transmitted through active walls, it may be appreciated that the active walls should be substantially similar, if not identical, in all dimensions including their thickness.

Figure 11 shows a sensor housing 132, including active walls 134. As understood herein, it can be difficult to simultaneously ensure that the surfaces of the active walls are sufficiently alike so as to uniformly disperse stress throughout a sensor core. Accordingly, as indicated by arrows 136, surfaces of the sensor housing can be shaped or finished by machining or other appropriate methods. When shaping the active walls, the desired appearance of the surfaces of the active walls should be, in non-limiting embodiments, of the same thickness and evenness and that the walls should themselves be substantially parallel to each other.

While the particular Magnetostrictive STRAIN SENSOR WITH SINGLE PIECE SENSOR CAVITY is herein shown and described in detail, it is to be understood that the subject matter which is encompassed by the present invention is limited only by the claims.

## Claims

1. A sensor assembly, comprising:
a magnetostrictive (MS) sensor (20, 52, 76, 96, 108, 126); a sensor housing (18, 50, 70, 98, 106) defining at least one active wall (28, 68, 80, 103, 116), a sensor channel (22, 58, 78, 94, 122) being disposed on a first side of the active wall, the MS sensor being disposed in the sensor channel and closely received therein, a fluid being disposable on a second side of the active wall, the active wall being the wall through which stress from pressure of the fluid causes stress on the MS sensor; wherein
the sensor channel defines an axis parallel to the active wall, whereby the MS sensor is positioned adjacent the active wall by sliding the MS sensor into an end of the sensor channel in a direction parallel to the active wall.

2. The sensor assembly of Claim 1, wherein the sensor channel (22) defines opposed sides each parallel to the active wall, the MS sensor touching both sides while disposed in the channel.

3. The sensor assembly of Claim 2, wherein the MS sensor is compressed between the sides of the sensor channel.

4. The sensor assembly of Claim 1, wherein the fluid is disposable in a fluid chamber (30) defining a closed end, the active wall (28) being defined by the closed end, the sensor channel defining a long axis parallel to the closed end.

5. The sensor assembly of Claim 1, wherein the fluid is disposable in a fluid chamber (64) defining a closed end and at least one sidewall, the active wall (62) being defined by one and only one of the sidewalls, the sensor channel defining a long axis parallel to the active wall.

6. The sensor assembly of Claim 1, wherein the fluid is disposable in a fluid chamber (76) defining opposed arms (76a) and a space therebetween, an active wall (80) being established along an inside edge of each arm, the sensor channel extending into the space between the active walls.

7. The sensor assembly of Claim 1, wherein the sensor housing (18, 50, 70) forms a fluid chamber holding the fluid.

8. The sensor assembly of Claim 1, wherein the sensor housing (98, 106) does not hold the fluid, the sensor housing being engageable with a vessel (100, 112) holding the fluid.

9. The sensor assembly of Claim 1, wherein the MS sensor (108) is a multi-piece sensor surrounded by an excitation coil (110) inducing a magnetic flux, the sensor housing being made of a magnetic material, the sensor channel being made of a unitary piece of material and providing a return flux path.

10. A method for establishing a sensor assembly, comprising:
sliding a magnetostrictive (MS) element (20, 52, 76, 96, 108, 126) into a sensor channel (22, 58, 78, 94, 122) of a sensor housing (18, 50, 70, 98, 106), the channel defining opposed sides, the MS element sliding against both sides as it moves in the channel;
disposing the MS element (20, 52, 76, 96, 108, 126) adjacent a first side of at least one active wall (28, 68, 80, 103, 116); and
disposing a fluid on a second side of the active wall, wherein pressure of the fluid against the active wall causes stress on the MS element, the MS element outputting a signal representative of the stress.

11. The method of Claim 10, wherein the MS element is compressed between the sides of the sensor channel.

12. The method of Claim 10, wherein the fluid is disposable in a fluid chamber defining a closed end (30), the active wall (28) being defined by the closed end, the sensor channel defining a long axis parallel to the closed end.

13. The method of Claim 10, wherein the fluid is disposable in a fluid chamber (64) defining a closed end and at least one sidewall, the active wall (62) being defined by one and only one of the sidewalls, the sensor channel defining a long axis parallel to the active wall.

14. The method of Claim 10, wherein the fluid is disposable in a fluid chamber (76) defining opposed arms (76a) and a space therebetween, an active wall (80) being established along an inside edge of each arm, the sensor channel extending into the space between the active walls.

15. A sensor for outputting a signal representative of stress caused by a source of stress, comprising:
magnetostrictive (MS) means (20, 52, 76, 96, 108, 126) held between opposed walls of a sensor channel and disposable in the channel by sliding the MS means in the channel between the walls, the channel being juxtaposable with the source of stress such that the source of stress causes stress in the MS means; and
signal means (24, 54, 74, 104, 110) configured for carrying a signal representative of stress of the MS means.

16. The sensor of Claim 15, comprising filler means (44) in the channel for filling space in the channel not occupied by the MS means.

17. The sensor of Claim 15, wherein the MS element is held in compression between the opposed walls.
